# EUROPÄISCHE PATENTSCHRIFT

(11) **EP 2 201 157 B1**
(45) Veröffentlichungstag und Bekanntmachung des Hinweises auf die Patenterteilung: **16.03.2011**
(21) Anmeldenummer: 08801983.1
(22) Anmeldetag: 10.09.2008
(51) Int. Cl.: C25B 9/06, H01M 8/10

(54) **BIPOLARPLATTE FÜR EINEN PEM-ELEKTROLYSEUR**
BIPOLAR PLATE FOR A PEM ELECTROLYZER
PLAQUE BIPOLAIRE POUR ÉLECTROLYSEUR PEM

(30) Priorität: 10.09.2007 DE 102007042985
(43) Veröffentlichungstag der Anmeldung: 30.06.2010
(73) Patentinhaber: Fraunhofer-Gesellschaft zur Förderung der angewandten Forschung e.V., 80686 München (DE)
(72) Erfinder: HACKER, Beatrice, 79183 Waldkirch (DE); JUNGMANN, Thomas, 79106 Freiburg (DE); WITTSTADT, Ursula, 79111 Freiburg (DE); SMOLINKA, Tom, 79110 Freiburg (DE)
(74) Vertreter: Pfenning, Meinig & Partner GbR
(86) Internationale Anmeldenummer: PCT/EP2008/007417
(87) Internationale Veröffentlichungsnummer: WO 2009/033648

(56) Entgegenhaltungen:
- WO-A-2004/054011
- WO-A-2005/006480
- US-A1- 2005 115 825

## Beschreibung

Die Erfindung betrifft eine Bipolarplatte für einen PEM-Elektrolyseur, einen mit dieser Bipolarplatte ausgestatteten PEM-Elektrolyseur und Verwendungen der Bipolarplatte sowie des Elektrolyseurs.

Herkömmliche Bipolarplatten (BiP) in PEM-Elektrolyseuren, d.h. Polymer-Elektrolyt-Membran-Elektrolyseuren bzw. Protonenaustauschermembran-Elektrolyseuren, haben einen Kern aus Titan, Stahl oder Edelstahl und weisen in den meisten Fällen eine Beschichtung oder eine dotierte Oberfläche auf, um den hochkorrosiven Bedingungen auf der Anode widerstehen zu können. Durch den Einsatz teurer Materialien, wie z.B. mit Gold beschichtetes Titan, und aufwändigen Bearbeitungstechniken, wie z.B. Fräsen, tragen die Bipolarplatten in PEM-Elektrolyse-Zellstapeln erheblich zu den Kosten bei (Smolinka, T., Rau, S., Hebling, C.: Polymer Electrolyte Membrane (PEM) Water Electrolysis. In Stolten, D. (Hrsg.): Hydrogen and Fuel Cells - Fundamentals, Technologies and Applications. Weinheim: WILEY-VCH Verlag GmbH & Co. KgaA, ISBN: 978-3-527-32711-9, S. 271-289).

Aufgabe der vorliegenden Erfindung ist es daher, eine Bipolarplatte und einen PEM-Elektrolyseur anzugeben, welche einfacher und preisgünstiger herzustellen sind. Diese Aufgabe wird durch die Bipolarplatte nach Anspruch 1 und den PEM-Elektrolyseur nach Anspruch 16 gelöst. Die jeweiligen abhängigen Ansprüche zeigen vorteilhafte Weiterbildungen der erfindungsgemäßen Bipolarplatte und des erfindungsgemäßen Elektrolyseurs. Die Ansprüche 28 und 29 geben Verwendungen der Bipolarplatte bzw. des PEM-Elektrolyseurs an.

Die erfindungsgemäße Bipolarplatte für einen PEM-Elektrolyseur weist zunächst einen zentralen Bereich und einen den zentralen Bereich umschließenden Randbereich auf. Die Bipolarplatte hat zwei einander gegenüberliegende Seiten, die ihre Plattenflächen, z.B. als Vorder- und Rückseite, darstellen. Der zentrale Bereich und der Randbereich beinhalten dabei den gesamten Teil der Platte zwischen den beiden einander gegenüber liegenden Seiten.

Der zentrale Bereich weist an beiden Seiten jeweils zumindest ein Strömungsfeld an der Oberfläche auf, wobei das Strömungsfeld eine Vielzahl von in der entsprechenden Oberfläche eingeformten Kanälen aufweist. Der Randbereich weist auf beiden Seiten der Oberfläche Zu- und/oder Ableitungen zu dem auf der entsprechenden Seite angeordneten Strömungsfeld auf.

Erfindungsgemäß ist nun zumindest ein Teil der Bipolarplatte von der einen zur anderen der beiden gegenüber liegenden Seiten elektrisch leitend ausgebildet, so dass ein Stromfluss von der einen zur anderen Seite der Platte möglich ist. Die Bipolarplatte ist hierbei so ausgestaltet, dass zumindest der zentrale Bereich zumindest bereichsweise durchgängig elektrisch leitend ausgebildet ist, so dass beispielsweis ein Stromfluss von einem Strömungsfeld zu dem auf der anderen Seite liegenden Strömungsfeld möglich ist.

Das Strömungsfeld ist vorzugsweise so ausgestaltet, dass es eine druckoptimierte Zufuhr des Wassers sowie Abfuhr der Gase und des Restwassers ermöglicht. Über die Zu- und Ableitungen können die Strömungsfelder mit Wasser versorgt werden und die produzierten Gase abtransportiert werden. Die beschriebene elektrische Leitfähigkeit der Bipolarplatte von der einen zur anderen Seite kann dadurch erzielt werden, dass in der Platte zumindest ein elektrisch leitendes Element angeordnet ist, welches sich von der einen zur anderen Seite oder zwischen der einen und der anderen Seite der Bipolarplatte erstreckt. Solche leitenden Elemente können Kontaktstifte sein, die die Platte durchstoßen. Diese Kontaktstifte sind dabei vorzugsweise strukturlos. Die leitenden Elemente können aber auch ein oder mehrere geformte Bleche sein, die so in der Bipolarplatte verlaufen, dass ein Teil des Bleches auf der einen Seite der Platte und ein Teil des Bleches auf der anderen Seite der Bipolarplatte hervortritt. Diese Bleche können wie ein Wellblech oder auch trapezförmig geformt sein, so dass abwechselnd je eine Sattelfläche des Trapezes auf der einen Seite der Bipolarplatte und eine Sattelfläche auf der anderen Seite der Bipolarplatte angeordnet ist oder hervortritt.

Vorzugsweise sind die Kanäle des oberen Strömungsfeldes in etwa senkrecht zu den Kanälen des unteren Strömungsfeldes angeordnet. Diese gitterartige Struktur bewirkt eine höhere Stabilität des Systems. Alternativ kann auch zumindest der zentrale Bereich oder ein Teil des zentralen Bereiches oder die gesamte Bipolarplatte oder Teile der Bipolarplatte ein leitendes Polymer aufweisen oder hieraus gebildet sein, welches die eine Seite mit der anderen Seite leitfähig verbindet. Zur Kostenersparnis ist es besonders vorteilhaft, wenn das oder die elektrisch leitenden Elemente in ein Grundmaterial der Platte, welches nicht leitfähig ist, eingebettet sind. Dieses Grundmaterial kann glasfaserverstärkter Kunststoff sein. Bei Verwendung leitfähiger Kunststoffe kann deren Leitfähigkeit durch zusätzliche leitende Elemente als interne Strombrücke verbessert werden. Die Kanäle des Strömungsfeldes können sich über das oder die leitfähigen Elemente erstrecken, weniger aufwändig herzustellen sind jedoch leitfähige Elemente, die keine Strömungskanäle aufweisen.

Um bei einem Aufbau mit in nicht leitendes Material eingearbeiteten leitenden Elementen die Dichtheit der Platte zu gewährleisten, ist es vorteilhaft, das oder die leitenden Elemente mittels O-Ringen abzudichten. Der entsprechende O-Ring kann dann entlang der Grenzfläche des leitenden Elementes zur Bipolarplatte oder zum Grundmaterial der Bipolarplatte verlaufen.

Das elektrisch leitende Element weist vorzugsweise ein Metall auf und besonders bevorzugt ein Material, welches den hochkorrosiven Bedingungen auf der Anode widerstehen kann. Ist das Material des leitenden Elementes nicht korrosionsbeständig, so ist es bevorzugt, dass das Element zumindest an jenen Flächen oberflächenbeschichtet ist, die an den Seiten der Bipolarplatte angeordnet sind. Zur Beschichtung wird hier dann vorzugsweise ein korrosions- bzw. säurebeständiges Material gewählt.

Neben dem Grundmaterial und den elektrisch leitenden Elementen können in das Grundmaterial weitere Füllstoffe, korrosionsbeständige metallische Pulver und/oder Fasern, Verstärkungsstoffe, Glasfasern, Antioxidantien, Pigmente und/oder Mischungen hieraus eingemischt sein.

Vorzugsweise weist der zentrale Bereich und/oder der Randbereich zumindest eine Vertiefung auf, welche sich vorzugsweise auf beiden Seiten findet. Darüber hinaus weist der Randbereich vorzugsweise zumindest auf einer Seite mindestens eine Dichtungsnut auf, welche für die Aufnahme einer O-Ringdichtung geeignet ist. Diese Dichtungsnut ist vorzugsweise umlaufend um den zentralen Bereich ausgebildet.

Alternativ oder zusätzlich kann im Randbereich eine durch zwei Komponenten-Spritzguss direkt applizierte Dichtung, insbesondere aus einem weichen Polymer oder einem Elastomer, angeordnet sein.

Um eine hohe Dichtigkeit des Elektrolyseurs und jener Bereiche der Bipolarplatte zu erreichen, die Flüssigkeit oder Gas führen, weist der Randbereich vorteilhafterweise Führungsbohrungen zur Aufnahme von Gewindestangen oder entsprechenden Fixierungsmitteln auf. Alternativ können Führungsnuten an der Außenseite der Bipolarplatten angeordnet sein, oder es kann auf diese Elemente vollständig verzichtet werden und der Zellstapel durch gebogene Stahlklampen zusammengepresst werden.

Erfindungsgemäß ist außerdem ein PEM-Elektrolyseur, welcher zumindest eine Bipolarplatte aufweist, die wie oben beschrieben ausgestaltet ist.

Vorzugsweise weist ein solcher PEM-Elektrolyseur zwei, im Wesentlichen parallel zueinander angeordnete Anpressplatten auf, die mit ihrer Innenseite einander zugewandt sind. An der Innenseite der jeweiligen Anpressplatte ist dann vorzugsweise eine Isolationsschicht angeordnet, auf welcher wiederum je ein Stromaufnehmer angeordnet ist. Auf der der entsprechenden Isolationsschicht bzw. Anpressplatte abgewandten Seite je eines Stromaufnehmers ist dann mindestens eine Bipolarplatte angeordnet. Werden zwei oder mehr Bipolarplatten verwendet, ist zwischen ihnen vorzugsweise jeweils eine Membran-Elektroden-Einheit (MEA) angeordnet, dessen Elektrode vorzugsweise nicht größer bemessen ist als die Stromverteiler. Es können auch weitere Bipolarplatten zwischen den beiden Bipolarplatten angeordnet sein, die jeweils durch eine Membran-Elektroden-Einheit voneinander getrennt sind.

Vorzugsweise ist jeweils zwischen einer Bipolarplatte und einer Membran-Elektroden-Einheit ein Stromverteiler angeordnet, so dass die Membran-Elektroden-Einheit von zwei Stromverteilern eingeschlossen ist. Hierbei ist der Bereich der Strömungskanäle (Strömungsfeld) bevorzugt nicht größer bemessen als die Stromverteiler. Dieser Stromverteiler oder ein Rahmen für einen Stromverteiler kann in eine Vertiefung in der Bipolarplatte eingelegt oder eingepasst sein.

Vorzugsweise ist zwischen den Anpressplatten und der jeweiligen Isolationsschicht mindestens ein Anpresselement vorhanden, durch welches eine gleichmäßigere Verteilung des Anpressdruckes auf die zwischen den Anpressplatten angeordneten Elemente erreicht wird. Besonders bevorzugt ist es, dass diese Anpresselemente im Wesentlichen in der Mitte der jeweiligen Plattenfläche angeordnet sind. Die Anpresselemente können aus einer oder mehreren Lagen Kunststofffolie gebildet sein, die mit zur Anpressplatte hin abnehmender Fläche aneinander gestapelt sind. Alternativ kann auf die Anpresselemente verzichtet werden und stattdessen die konische Form bereits in der Anpressplatte integriert sein, indem sie zur Mitte hin entsprechend verdickt ausgeformt ist.

Zur Zu- und Abfuhr von Wasser ist es bevorzugt, wenn die Anpressplatten und/oder die daran angrenzenden Isolationsschichten und/oder die Biploarplatten und/oder andere Elemente des Elektrolyseurs jeweils zumindest eine Zuleitung und zumindest eine Ableitung aufweisen.

Zur Abdichtung des Elektrolyseurs und zur Abdichtung der Halbzellen nach außen als auch nach innen gegen Zu- und Ableitungen der anderen Halbzellen ist es bevorzugt, wenn in zumindest einer Dichtungsnut im Randbereich einer Bipolarplatte zumindest eine Dichtung, insbesondere zumindest ein O-Ring, ein Dichtungsring und/oder eine applizierte Dichtung, eingebracht ist. Eine applizierte Dichtung kann aus einem weichen Kunststoff oder einem Elastomer zum Beispiel im Mehrkomponentenspritzgussverfahren in die Bipolarplatte integriert sein.

Eine gesonderte Kühlvorrichtung oder Kühlstruktur ist für den erfindungsgemäßen Elektrolyseur im Gegensatz zum Stand der Technik nicht erforderlich.

Die Vorteile der erfindungsgemäßen Bipolarplatte und des erfindungsgemäßen PEM-Elektrolyseurs liegen vor allem in seiner verfahrenstechnisch einfachen Herstellung und den geringen mit seiner Herstellung verbundenen Herstellungskosten. Darüber hinaus lassen sich die Drücke von zugeleiteten Flüssigkeiten und abgeleiteten Gasen besonders gut kontrollieren. Die Bestandteile des Elektrolyseurs weisen eine besonders hohe Dichtigkeit gegeneinander auf. Darüber hinaus wird eine besonders gute Verteilung des Stromes in den Bipolarplatten erreicht. Die Stromzufuhr kann über äußere Stromaufnehmer oder über die Anpressplatten erfolgen. Über die Stromaufnehmer wird dann der Strom über die Kontaktstifte (oder alternativ durch das leitfähige Material der Bipolarplatte) zu den Stromverteilern geleitet, die direkten elektrischen Kontakt mit den Elektroden haben.

Im Folgenden soll die Erfindung anhand einiger Figuren näher erläutert werden. Die Beispiele sind nicht beschränkend zu verstehen und die hierin gezeigten Merkmale sind im erfindungsgemäßen Elektrolyseur und in der erfindungsgemäßen Bipolarplatte miteinander kombinierbar. Gleiche Bezugszeichen kennzeichnen entsprechende Merkmale.

Es zeigt
- Figur 1: einen erfindungsgemäßen PEM-Elektrolyseur,
- Figur 2: eine erfindungsgemäße Bipolarplatte mit einem durch einen O-Ring abgedichteten leitfähigen Element,
- Figur 3: eine Bipolarplatte mit einem spritzumgosse- nen leitfähigen Element,
- Figur 4: eine Bipolarplatte mit einer applizierten Dichtung,
- Figur 5: eine Bipolarplatte mit einem trapezförmig verlaufenden Blech als leitfähigem Element und
- Figur 6: einen PEM-Elektrolyseur mit Anpresselemen- ten zur Verteilung des Anpressdrucks.

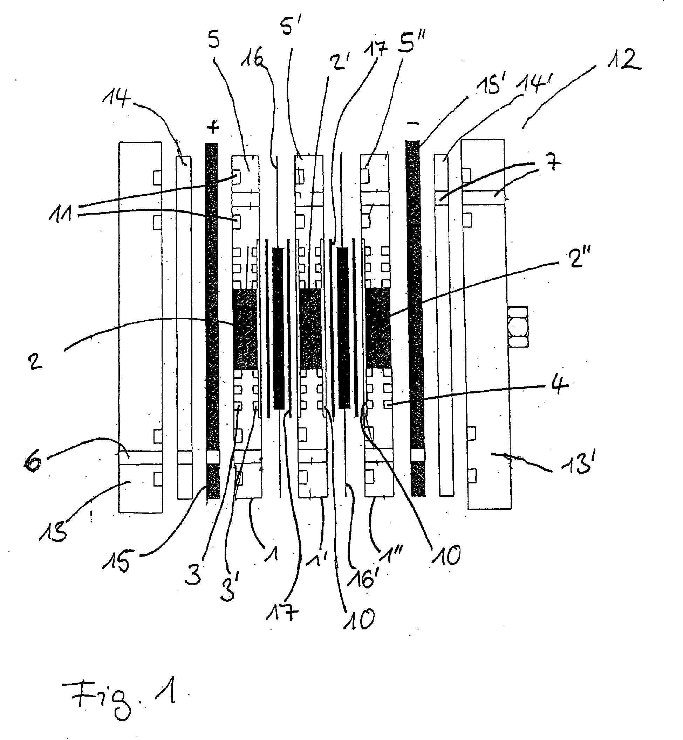

Figur 1 zeigt einen Schnitt durch einen erfindungsgemäßen PEM-Elektrolyseur 12. Der in Figur 1 gezeigte Elektrolyseur 12 weist drei Bipolarplatten 1, 1' und 1'' auf, welche durch jeweils eine zwischen zwei Stromverteilern 17 angeordnete Membran-Elektroden-Einheit (MEA) 16 voneinander getrennt sind. Die drei Bipolarplatten 1, 1' und 1" sind gemeinsam zwischen zwei Stromaufnehmern 15 und 15' angeordnet. Die Stromaufnehmer 15 und 15' grenzen je mit ihrer den Bipolarplatten abgewandten Seiten über jeweils eine Isolierung 14, 14', z.B. eine Kunststoffmatte aus Viton, an die Anpressplatten 13 und 13'. Werden also die Anpressplatten 13 und 13' mit einer Kraft gegeneinander beaufschlagt, so pressen sie die zwischen ihnen liegende Anordnung aus Bipolarplatten 1, 1', 1'', MEAs 16, 16', Stromaufnehmern 15, 15' und Isolierungen 14, 14' zusammen. Die genannten Elemente sind im Wesentlichen flächig ausgedehnt und im Elektrolyseur mit parallelen Flächen nebeneinander angeordnet. Die Vorrichtung weist außerdem Kanäle für die Wasserzufuhr 6 und für die Gasableitung 7 auf.

Im gezeigten Beispiel weisen die Bipolarplatten 1, 1' und 1'' Vertiefungen 10 auf, in welchen beim Zusammendrücken der Platten die Stromverteiler 17 zu liegen kommen. Die beiden äußeren Bipolarplatten 1 und 1'' weisen eine solche Vertiefung auf ihrer den nächstliegenden Anpressplatten abgewandten Seite auf, während die mittlere Bipolarplatte 1' diese Vertiefung auf beiden Seiten aufweist.

Obwohl die Bipolarplatte nur im zentralen Bereich durchgängig elektrisch leitend ausgebildet ist, wird über die Stromverteiler 17 der Strom auch in den Randbereich 5 geleitet. Elektrode der MEA 16, Stromverteiler 17 und Strömungsfeld 3 sind annähernd deckungsgleich, so dass auf der gesamten Elektrodenfläche die Gasentwicklung erfolgen kann. Die Membran der MEA 16 hingegen geht über das Strömungsfeld hinaus, zumindest so dass die Dichtungen abgedeckt sind. Zur Abdichtung drückt die Dichtung immer auf die Membran. In der Regel hat die Membran ungefähr die Form der gesamten Bipolarplatte.

Zu erkennen sind bei allen Bipolarplatten außerdem die Strömungsfelder 3 und 3' mit je einer Mehrzahl von Strömungskanälen 4 und 4', jeweils auf beiden Seiten der Bipolarplatte. Durch sie kann Wasser zugeführt und Gas abgeführt werden. Außerdem kann Restwasser abgeführt werden.

Die gezeigten Bipolarplatten 1, 1' und 1'' weisen einerseits jeweils einen Randbereich 5, 5' und 5'', andererseits einen zentralen Bereich auf. In den zentralen Bereichen sind leitfähige Elemente, z. B. in form von Kontaktstiften 2, 2' und 2'' angeordnet, welche sich von der einen Seite jeder Bipolarplatte 1, 1' und 1'' zur jeweils anderen Seite der entsprechenden Platte erstrecken.

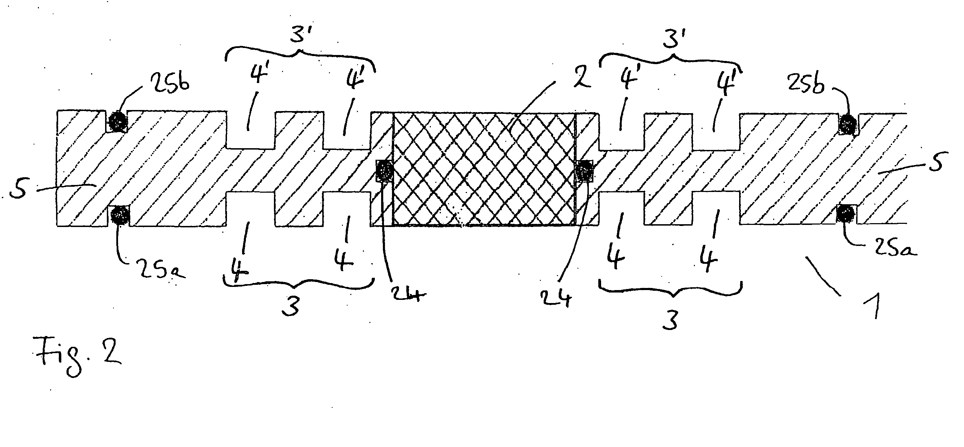

Figur 2 zeigt eine erfindungsgemäße Bipolarplatte 1 mit einem zentralen Bereich und einem Randbereich 5. Im zentralen Bereich ist ein leitfähiges Element, so angeordnet, dass es die eine und die andere Seite der Bipolarplatte elektrisch leitend miteinander verbindet. Um die Dichtheit der Bipolarplatte zu gewährleisten ist die Durchkontaktierung, d.h. das leitfähige Element, mit einem in der dem leitfähigen Element zugewandten Wandung der Bipolarplatte angeordneten Dichtring 24, der das leitfähige Element umläuft, abdichtet. Der interne O-Ring 24 verläuft in einer Dichtungsnut. Der Zylinderstift 2 wird dann durch eine Presspassung abgedichtet. Im Randbereich 5 der Bipolarplatte verlaufen außerdem auf beiden Seiten in Nuten angeordnete O-Ringe 25a und 25b.

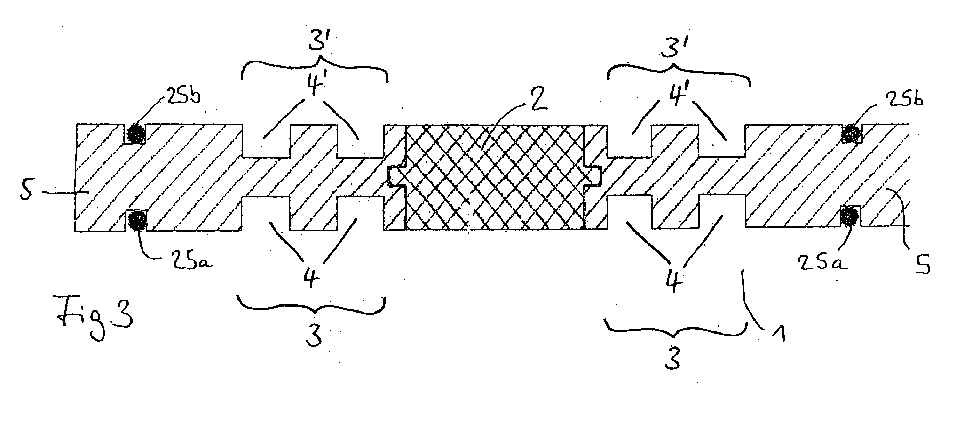

Figur 3 zeigt eine Bipolarplatte entsprechend der vorliegenden Erfindung, in welcher das leitfähige Element z. B. ein Kontaktstift 2, durch Spritzumgießen im zentralen Bereich in die Bipolarplatte 1 eingelassen ist. Die Funktion des leitfähigen Elementes und der anderen gezeigten Merkmale entspricht jener der in Figur 2 gezeigten Merkmale.

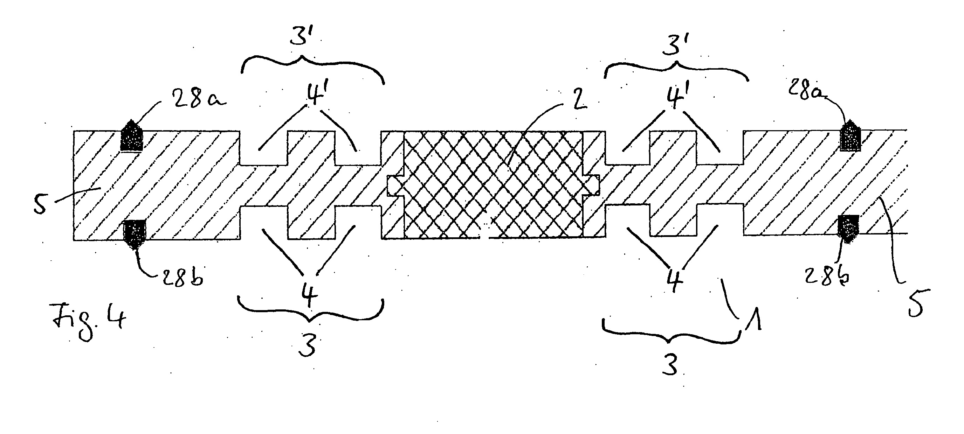

Figur 4 zeigt eine weitere Bipolarplatte entsprechend der vorliegenden Erfindung, in welcher das leitfähige Element z. B. ein Kontaktstift 2, ebenfalls durch Spritzumgießen in die Bipolarplatte 1 abgedichtet eingefügt ist. Im Gegensatz zu den in den Figuren 2 und 3 gezeigten O-Ringen 25a und 25b wird hier die Abdichtung der Bipolarplatte nach außen durch applizierte Dichtungen 28a und 28b erreicht. Die anderen Merkmale entsprechen jenen der vorangegangenen Figuren.

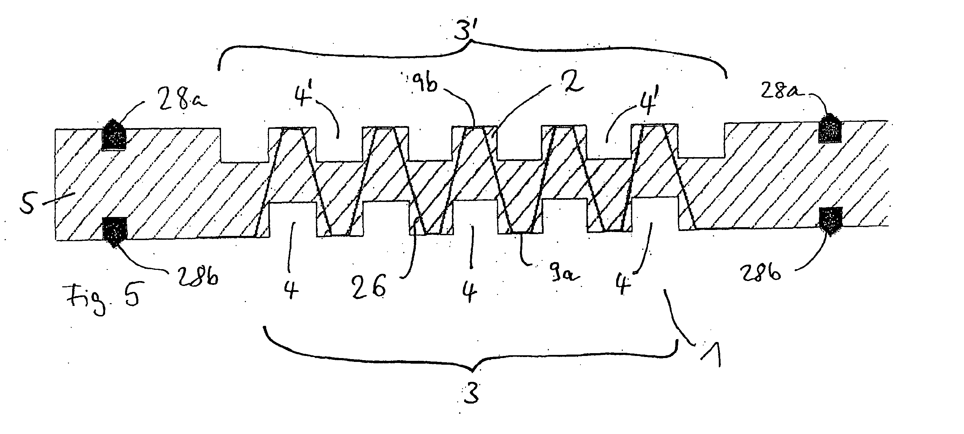

Figur 5 zeigt eine erfindungsgemäße Bipolarplatte, in welcher die Durchkontaktierung von der einen zur anderen Seite der Platte durch ein trapezförmig gewelltes Blech 9 erreicht wird. Das Blech verläuft hierbei im Zick-Zack zwischen der einen und der anderen Seite und liegt auf beiden Seiten in Bereichen 9a und 9b frei in der entsprechenden Seite der Bipolarplatte. Ein solches Blech 9 kann ein vorgestanztes und geformtes Blech mit einer Dicke beispielsweise zwischen 200 µm und 2 mm sein, welches spritzumgossen wird, so dass das Blech beide Seiten der Bipolarplatte 1 elektrisch leitend miteinander verbindet. Das Blechmaterial kann ein korrosionsresistentes oder oberflächenbeschichtetes Metall, wie z.B. Titan aufweisen oder korrosionsbeständig beschichtet sein. Im gezeigten Beispiel sind in der Längsrichtung der trapezförmigen Faltungen des Blechs 9 in der Bipolarplatte beidseitig Strömungsfelder 3, 3', die durch entsprechende Kanäle 4 und 4' gebildet sind, eingearbeitet.

Der Einsatz eines zentralen Kontaktstiftes 2 ist vor allem für Bipolarplatten mit verhältnismäßig kleiner aktiver Oberfläche geeignet. Bei größeren Geometrien (beispielsweise mit einer Fläche größer als 150 cm²) können mehrere Kontaktstifte durch Spritzumgießen in die Bipolarplatte integriert werden.

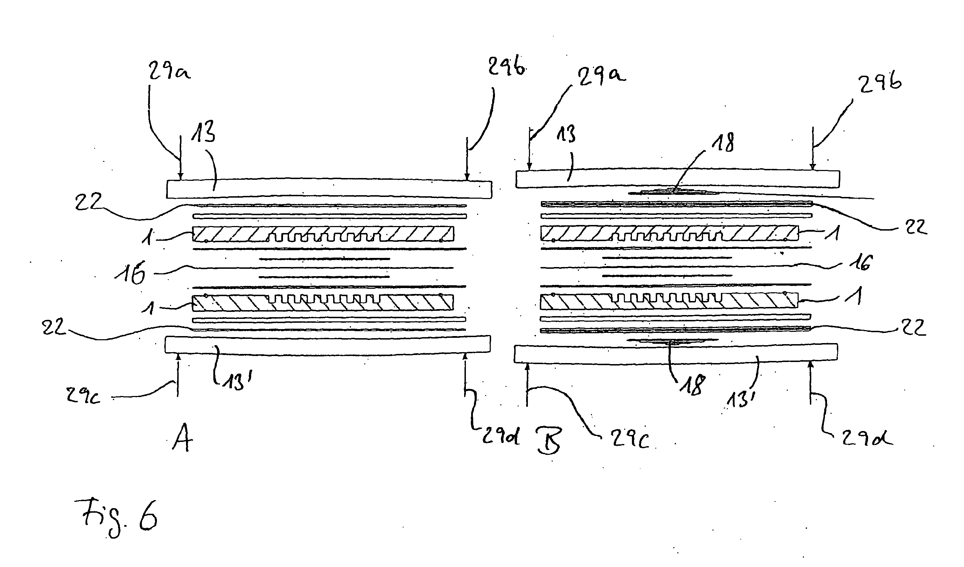

Figur 6A und 6B zeigen Möglichkeiten zur Verbesserung des Anpressdruckes im Elektrolyse-Zellstapel. Typischerweise werden die einzelnen Elektrolyse-Zellen eines Zellstapels mit Hilfe von Anpressplatten 13, 13', welche mit Gewindestangen verbunden sind, zusammengepresst, wie dieses in Figur 6A gezeigt ist. Dadurch wird eine gute elektrische Kontaktierung und die Abdichtung der einzelnen Zellen garantiert. Da die Gewindestangen konstruktionsbedingt außen sitzen, üben sie einen Druck wie durch die Pfeile 29a bis 29d angedeutet aus. Eine Durchbiegung bzw. Wölbung der Anpressplatten zur Mitte hin kann hier nur durch eine ausreichende Steifigkeit des Materials verhindert werden. Die Anpressplatten müssen dazu entsprechend massiv ausgelegt werden. Zur Materialeinsparung und Gewichtsreduzierung können mittig zwischen der ersten Zelle und der entsprechenden Anpressplatte und der letzten Zelle und der entsprechenden Anpressplatte dünne Folien 18, beispielsweise aus Kunststoff, angeordnet werden. Diese Folien können entsprechend ihrem Durchmesser gestapelt werden, so dass sie eine pyramidenförmige oder kegelförmige Struktur bilden. Dies ist in Figur 6B gezeigt. Hierdurch wird eine gleichmäßige Anpressung über den gesamten Bereich der aktiven Fläche der Zelle erreicht.

Der elektrische Isolator 22 kann eine ca. 1 mm dicke Kunststoffmatte, beispielsweise Viton, sein, und trägt dadurch zu einer zusätzlichen Verbesserung des Anpressdruckes bei.

## Patentansprüche

1. Bipolarplatte (1) für einen PEM-Elektrolyseur, umfassend
a) einen zentralen Bereich, der beidseitig an der Oberfläche je ein Strömungsfeld (3, 3') mit einer Vielzahl von darin eingeformten Kanälen (4, 4') aufweist, sowie
b) einen den zentralen Bereich umschließenden Randbereich (5), in dem Zu- (6) und Ableitungen (7) zum Strömungsfeld (3) angebracht sind,
wobei zumindest der zentrale Bereich zumindest bereichsweise durchgängig elektrisch leitend ausgebildet ist, so dass ein Stromfluss vom einen Strömungsfeld (3) zum auf der anderen Seite liegenden Strömungsfeld (3') ermöglicht ist,
**dadurch gekennzeichnet,**
**dass** die Bipolarplatte (1) aus einem Grundmaterial, ausgewählt aus der Gruppe bestehend aus nichtleitfähigen und/oder glasfaserverstärkten Kunststoffen, insbesondere Polycarbonat, Polyetheretherketon, Polyphenylensulfid, Polyvinylidenfluorid, Epoxyvinylester, Vinylester, Epoxidharz, Polyamide, Polyamidimide, Polyethylen, Polypropylen, Polytetrafluorethylen, flüssigkristallinen Polymeren und/oder Blends und/oder Copolymeren hieraus, oder zumindest der zentrale Bereich oder die gesamte Bipolarplatte (1) zumindest partiell aus einem leitenden Polymer gebildet ist.

2. Bipolarplatte (1) nach Anspruch 1, **dadurch gekennzeichnet, dass** der zentrale Bereich zumindest ein leitendes Element aufweist, das durch den zentralen Bereich durchgeführt ist.

3. Bipolarplatte (1) nach dem vorhergehenden Anspruch, herstellbar durch Presspassung des mindestens einen leitenden Elementes in den zentralen Bereich.

4. Bipolarplatte (1) nach einem der Ansprüche 2 bis 3, herstellbar durch Spritzumgießen des zumindest einen leitenden Elementes mit dem Grundmaterial.

5. Bipolarplatte (1) nach einem der Ansprüche 2 bis 4, **dadurch gekennzeichnet, dass** das leitende Element ausgewählt ist aus der Gruppe bestehend aus Kontaktstift (2) und/oder geformtem Blech (9) und/oder, dass das leitende Element aus einem elektrischen Leiter, vorzugsweise einem Metall ausgewählt aus der Gruppe bestehend aus Titan, Kupfer, Aluminium, legierten oder unlegierten Stählen, insbesondere rost- und säurebeständigen (feritischen, martensitischen oder austenitischen) Edelstählen mit hohem Chrom- und/oder Nickelgehalt und/oder Legierungen und/oder Mischungen hiervon, gebildet ist und/oder dass das elektrisch leitende Element oberflächenbeschichtet ist, bevorzugt mit Gold, Platin, Nickel oder Nickellegierungen, Wolframcarbid, Titannitrid, Siliciumnitrid, Chromnitrid, Ceroxiden, mit niedervalenten Elementen dotiertem Wolframoxid, mit niedervalenten Elementen dotiertem Molybdänoxid, dotierten und säurestabilen vanadiumhaltigen Hetero-Polysäuren.

6. Bipolarplatte (1) nach Anspruch 5, **dadurch gekennzeichnet, dass** das Blech (9) in Form eines Trapezes oder Wellblechs geformt ist, vorzugsweise eine wiederholte Trapezform oder Wellblechform aufweist.

7. Bipolarplatte nach einem der vorhergehenden Ansprüche, **dadurch gekennzeichnet, dass** weitere Stoffe, ausgewählt aus der Gruppe bestehend aus Füllstoffen, korrosionsbeständigen metallischen Pulvern oder Fasern, Verstärkungsstoffen, Glasfasern, Antioxidantien, Pigmenten und/oder Mischungen hieraus im Grundmaterial enthalten sind.

8. Bipolarplatte (1) nach einem der vorhergehenden Ansprüche, **dadurch gekennzeichnet, dass** der zentrale Bereich beidseitig eine Vertiefung (10) aufweist.

9. Bipolarplatte (1) nach einem der vorhergehenden Ansprüche, **dadurch gekennzeichnet, dass** im Randbereich (5) eine durch Zweikomponenten-Spritzguss direkt applizierte Dichtung, insbesondere aus einem weichen Polymer, angeordnet ist.

10. Bipolarplatte (1) nach einem der vorhergehenden Ansprüche, **dadurch gekennzeichnet, dass** die Kanäle (4) zu den Kanälen (4') im Wesentlichen senkrecht zueinander ausgerichtet sind.

11. PEM-Elektrolyseur (12), umfassend mindestens eine Bipolarplatte (1) nach einem der vorhergehenden Ansprüche.

12. PEM-Elektrolyseur (12) nach Anspruch 11, mit folgende Aufbau:
a) zuäußerst je eine die beiden Seiten des PEM-Elektrolyseurs begrenzende Anpressplatte (13, 13'),
b) je eine an die Innenseite der jeweiligen Anpressplatte (13, 13') angrenzende Isolationsschicht (14, 14'),
c) je einen an die Innenseite der jeweiligen Isolationsschicht (14, 14') angrenzenden Stromaufnehmer (15, 15'),
d) je eine an die Innenseite des jeweiligen Stromaufnehmers (15, 15') angrenzende Bipolarplatte (1),
e) eine zwischen die beiden Bipolarplatten (1) eingebrachte Membran-Elektroden-Einheit (MEA) (16), wobei die Elektrode der MEA (16) nicht größer bemessen ist, als der zentrale Bereich der Bipolarplatte (1), sowie
f) jeweils zwischen Bipolarplatte (1) und MEA (16) ein Stromverteiler (17), wobei der Stromverteiler (17) bevorzugt in die Vertiefung (10) der Bipolarplatte eingepasst ist.

13. PEM-Elektrolyseur (12) nach dem vorhergehenden Anspruch, **dadurch gekennzeichnet, dass** zwischen der Membran-Elektroden-Einheit (MEA) (16) und einer daran angrenzenden Bipolarplatte (1') paarweise mindestens eine weitere MEA (16') sowie daran angrenzend mindestens eine weitere Bipolarplatte (1'') eingebracht ist.

14. PEM-Elektrolyseur (12) nach einem der Ansprüche 11 bis 13, **dadurch gekennzeichnet, dass** jeweils zwischen den Anpressplatten (13, 13') und den Isolationsschichten (14, 14') mindestens ein Anpresselement (18) vorhanden ist, wobei das Anpresselement (18) bevorzugt aus mindestens einer Lage, insbesondere einer Kunststofffolie, gebildet ist.

15. PEM-Elektrolyseur (12) nach einem der Ansprüche 11 bis 14, **dadurch gekennzeichnet, dass** die Anpressplatten (13, 13') zur Mitte hin in Richtung der Isolationsschichten (14, 14') verdickt ausgeformt sind.

16. PEM-Elektrolyseur (12) nach einem der Ansprüche 11 bis 15, **dadurch gekennzeichnet, dass** die Anpressplatten (13, 13') sowie die daran angrenzenden Isolationsschichten (14, 14') jeweils eine Zuleitung (6) sowie eine Ableitung (7) aufweisen

17. PEM-Elektrolyseur (12) nach einem der Ansprüche 11 bis 16, **dadurch gekennzeichnet, dass** in der mindestens einen Dichtungsnut (11) eine Dichtung, insbesondere ein Dichtungsring und/oder eine applizierte Dichtung eingebracht ist.

18. PEM-Elektrolyseur (12) nach einem der Ansprüche 11 bis 17, **dadurch gekennzeichnet, dass** die flächige Ausdehnung des zentralen Bereichs der Bipolarplatte (1) im Wesentlichen der flächigen Ausdehnung der Elektrode der MEA (16) entspricht.

19. Verwendung eines PEM-Elektrolyseurs (12) nach einem der Ansprüche 11 bis 18 zur Elektrolyse von Wasser.

## Claims

1. Bipolar plate (1) for a PEM electrolyser, comprising
a) a central region which comprises a flow field (3, 3'), having a plurality of channels (4, 4') formed therein, on the surface on either side and
b) an edge region (5) which encloses the central region and in which inputs (6) and outputs (7) for the flow field (3) are attached,
at least the central region being formed so as to be continuously electrically conductive at least in regions, in such a way as to make possible a flow of current from one flow field (3) to the flow field (3') located on the other side, **characterised in that** the bipolar plate (1) is formed of a base material selected from the group consisting of non-conductive and/or glass-fibre-reinforced plastics materials, in particular polycarbonate, polyetheretherketone, polyphenylene sulphide, polyvinylidene fluoride, epoxy vinyl ester, vinyl ester, epoxy resin, polyamides, polyamid-imides, polyethylene, polypropylene, polytetrafluoroethylene, liquid crystal polymers and/or blends and/or copolymers thereof, or at least the central region or the entire bipolar plate (1) is formed of a conductive polymer at least in part.

2. Bipolar plate (1) according to claim 1, **characterised in that** the central region comprises at least one conductive member which is passed through the central region.

3. Bipolar plate (1) according to the preceding claim which can be manufactured by interference-fitting the at least one conductive member in the central region.

4. Bipolar plate (1) according to either of claims 2 to 3 which can be manufactured by injection-moulding the base material around the at least one conductive member.

5. Bipolar plate (1) according to any one of claims 2 to 4, **characterised in that** the conductive member is selected from the group consisting of a contact pin (2) and/or a shaped metal sheet (9), and/or **in that** the conductive member is formed of an electric conductor, preferably a metal selected from the group consisting of titanium, copper, aluminium, alloyed or unalloyed steels, in particular stainless and acid-resistant (ferritic, martensitic or austenitic) high-grade steels having a high chromium and/or nickel content and/or alloys and/or mixtures thereof, and/or **in that** the electrically conductive member is surface-coated, preferably with gold, platinum, nickel or nickel alloys, tungsten carbide, titanium nitride, silicon nitride, chromium nitride, ceroxides, tungsten oxide doped with low-valency elements, molybdenum oxide doped with low-valency elements, doped and acid-stable hetero-polyacids containing vanadium.

6. Bipolar plate (1) according to claim 5, **characterised in that** the metal sheet (9) is in the form of a trapezium or corrugated sheet, preferably having a repeated trapezium shape or corrugated shape.

7. Bipolar plate according to any one of the preceding claims, **characterised in that** further substances, selected from the group consisting of fillers, corrosion-resistant metal powders or fibres, reinforcing substances, glass fibres, antioxidants, pigments and/or mixtures thereof are contained in the base material.

8. Bipolar plate (1) according to any one of the preceding claims, **characterised in that** the central region comprises a recess (10) on each side.

9. Bipolar plate (1) according to any one of the preceding claims, **characterised in that** a seal, applied directly by two-component injection moulding and in particular made of a soft polymer, is arranged in the edge region (5).

10. Bipolar plate (1) according to any one of the preceding claims, **characterised in that** the channels (4) and the channels (4') are orientated substantially mutually perpendicularly.

11. PEM electrolyser (12), comprising at least one bipolar plate (1) according to any one of the preceding claims.

12. PEM electrolyser (12) according to claim 11, having the following construction:
a) outermost, a pressure plate (13, 13') delimiting the PEM electrolyser on either side,
b) an insulating layer (14, 14') adjacent to the inside of each pressure plate (13, 13'),
c) a current pick-up (15, 15') adjacent to the inside of each insulating layer (14, 14'),
d) a bipolar plate (1) adjacent to the inside of each current pick-up (15, 15'),
e) a membrane electrode assembly (MEA) (16) introduced between the two bipolar plates (1), the electrode of the MEA (16) not being larger in size than the central region of the bipolar plate (1), and
f) a current distributor (17) between each bipolar plate (1) and the MEA (16), the current distributor (17) preferably being fitted into the recess (10) in the bipolar plate.

13. PEM electrolyser (12) according to the preceding claim, **characterised in that** at least one further MEA (16') and at least one further bipolar plate (1'') adjacent thereto are introduced in pairs between the membrane electrode assembly (MEA) (16) and a bipolar plate (1') adjacent thereto.

14. PEM electrolyser (12) according to any one of claims 11 to 13, **characterised in that** there is at least one pressure member (18) in each case between the pressure plates (13, 13') and the insulating layers (14, 14'), the pressure member (18) preferably being formed of at least one layer, in particular a plastics material film.

15. PEM electrolyser (12) according to any one of claims 11 to 14, **characterised in that** the pressure plates (13, 13') are formed thickened towards the insulating layers (14, 14') towards the middle.

16. PEM electrolyser (12) according to any one of claims 11 to 15, **characterised in that** the pressure plates (13, 13') and the insulating layers (14, 14') arranged adjacent thereto each comprise an input (6) and an output (7).

17. PEM electrolyser (12) according to any one of claims 11 to 16, **characterised in that** a seal, in particular a ring seal and/or an applied seal, is introduced into the at least one sealing groove (11).

18. PEM electrolyser (12) according to any one of claims 11 to 17, **characterised in that** the planar extent of the central region of the bipolar plate (1) substantially corresponds to the planar extent of the electrode of the MEA (16).

19. Use of a PEM electrolyser (12) according to any one of claims 11 to 18 for electrolysing water.

## Revendications

1. Plaque bipolaire (1) pour un électrolyseur PEM, comprenant :
a) une zone centrale, qui présente des deux côtés sur la surface, respectivement, un champ d'écoulement (3, 3') avec une pluralité de canaux (4, 4') qui y sont moulés, ainsi que
b) une zone de bord (5) entourant la zone centrale et dans laquelle des lignes d'alimentation (6) et de dérivation (7) sont appliquées au champ d'écoulement (3)
dans laquelle au moins la zone centrale est conformée au moins par segments pour être conductrice de l'électricité en continu de sorte qu'un flux de courant d'un champ d'écoulement (3) au champ d'écoulement (3') situé de l'autre côté soit possible,
**caractérisée en ce que**
la plaque bipolaire (1) est formée d'un matériau de base choisi dans le groupe constitué de matériaux synthétiques non conducteurs et/ou renforcés par des fibres de verre, en particulier un polycarbonate, une polyétheréthercétone, du poly(sulfure de phénylène), du poly(fluorure de vinylidène), un ester d'époxyvinyle, un ester de vinyle, une résine époxyde, des polyamides, des polyamide-imides, du polyéthylène, du polypropylène, du polytétrafluoréthylène, des polymères de cristaux liquides et/ou des mélanges et/ou des copolymères de ceux-ci, ou au moins la zone centrale ou la plaque bipolaire entière (1) étant formée au moins en partie d'un polymère conducteur.

2. Plaque bipolaire (1) selon la revendication 1, **caractérisée en ce que** la zone centrale présente au moins un élément conducteur qui passe à travers la zone centrale.

3. Plaque bipolaire (1) selon la revendication précédente qui peut être fabriquée par ajustement serré du au moins un élément conducteur dans la zone centrale.

4. Plaque bipolaire (1) selon l'une quelconque des revendications 2 à 3, qui peut être fabriquée par moulage par injection du au moins un élément conducteur avec le matériau de base.

5. Plaque bipolaire (1) selon l'une quelconque des revendications 2 à 4, **caractérisée en ce que** l'élément conducteur est choisi dans le groupe constitué d'une broche de contact (2) et/ou de tôle façonnée (9) et/ou **en ce que** l'élément conducteur est formé d'un conducteur électrique, de préférence un métal choisi dans le groupe constitué du titane, du cuivre, de l'aluminium, des aciers alliés ou non alliés, en particulier des aciers fins (ferritiques, martensitiques ou austénitiques) résistant à la rouille et aux acides avec une teneur élevée en chrome et/ou en nickel et/ou en alliages et/ou en mélanges de ceux-ci, et/ou **en ce que** l'élément conducteur de l'électricité est revêtu en surface de préférence d'or, de platine, de nickel ou d'alliages de nickel, de carbure de tungstène, de nitrure de titane, de nitrure de silicium, de nitrure de chrome, d'oxydes cériques, d'oxyde de tungstène dopé d'éléments de faible valence, d'oxyde de molybdène dopée d'éléments de faible valence et d'hétéropolyacides contenant du vanadium dopés et stables aux acides.

6. Plaque bipolaire (1) selon la revendication 5, **caractérisée en ce que** la tôle (9) se présente sous la forme d'un trapèze ou d'une tôle ondulée, présentant de préférence une forme de trapèze ou une forme de tôle ondulée répétée.

7. Plaque bipolaire (1) selon l'une quelconque des revendications précédentes, **caractérisée en ce que** d'autres matériaux choisis dans le groupe constitué des charges, des poudres ou des fibres métalliques résistant à la corrosion, des matériaux de renfort, des fibres de verre, des antioxydants, des pigments et/ou de leurs mélanges sont contenus dans le matériau de base.

8. Plaque bipolaire (1) selon l'une quelconque des revendications précédentes, **caractérisée en ce que** la zone centrale présente des deux côtés un creux (10).

9. Plaque bipolaire (1) selon l'une quelconque des revendications précédentes, **caractérisée en ce que** dans la zone de bord (5) est aménagé un joint d'étanchéité appliqué directement par moulage par injection à deux composants, en particulier formé d'un polymère souple.

10. Plaque bipolaire (1) selon l'une quelconque des revendications précédentes, **caractérisée en ce que** les canaux (4) sont orientés mutuellement sensiblement perpendiculairement aux canaux (4').

11. Electrolyseur PEM (12) comprenant au moins une plaque bipolaire (1) selon l'une quelconque des revendications précédentes.

12. Electrolyseur PEM (12) selon la revendication 11, présentant la structure suivante :
a) le plus à l'extérieur, respectivement, une plaque de pression (13, 13') délimitant les deux côtés de l'électrolyseur PEM,
b) respectivement, une couche isolante (14, 14') contiguë à la face interne de la plaque de pression respective (13, 13'),
c) respectivement, un capteur de courant (15, 15') contigu à la face interne de la couche isolante respective (14, 14'),
d) respectivement, une plaque bipolaire (1) contiguë à la face interne du capteur de courant respectif (15, 15'),
e) une unité à membrane-électrode (MEA) (16) insérée entre les deux plaques bipolaires (1), dans laquelle l'électrode de la MEA (16) n'est pas dimensionnée plus grande que la zone centrale de la plaque bipolaire (1), ainsi que
(f) respectivement entre la plaque bipolaire (1) et la MEA (16) un distributeur de courant (17), lequel distributeur de courant (17) est ajusté dans le creux (10) de la plaque bipolaire.

13. Electrolyseur PEM (12) selon la revendication précédente, **caractérisé en ce que** l'on insère entre l'unité à membrane-électrode (MEA) (16) et une plaque bipolaire (1') qui y est contiguë, par paires, au moins une autre MEA (16) ainsi qu'au moins une autre plaque bipolaire (1'') qui y est contiguë.

14. Electrolyseur PEM (12) selon l'une quelconque des revendications 11 à 13, **caractérisé en ce qu'**il est prévu respectivement entre les plaques de pression (13, 13') et les plaques isolantes (14, 14') au moins un élément de pression (18), lequel élément de pression (18) est formé de préférence d'au moins une couche, en particulier d'une couche d'un matériau synthétique.

15. Electrolyseur PEM (12) selon l'une quelconque des revendications 11 à 14, **caractérisé en ce que** les plaques de pression (13, 13') sont épaissies vers le centre dans la direction des couches isolantes (14, 14').

16. Electrolyseur PEM (12) selon l'une quelconque des revendications 11 à 15, **caractérisé en ce que** les plaques de pression (13, 13') ainsi que les couches isolantes (14, 14') qui y sont contiguës présentent respectivement un ligne d'alimentation (6) ainsi qu'une ligne de dérivation (7).

17. Electrolyseur PEM (12) selon l'une quelconque des revendications 11 à 16, **caractérisé en ce que** l'on insère dans la au moins une rainure d'étanchéité (11) un joint d'étanchéité, en particulier une bague d'étanchéité et/ou un joint étanche appliqué.

18. Electrolyseur PEM (12) selon l'une quelconque des revendications 11 à 17, **caractérisé en ce que** l'extension en surface de la zone centrale de la plaque bipolaire (1) correspond sensiblement à l'extension en surface de l'électrode de la MEA (16).

19. Utilisation d'un électrolyseur PEM (12) selon l'une quelconque des revendications 11 à 18 pour l'électrolyse de l'eau.
